# EUROPÄISCHE PATENTSCHRIFT

(11) **EP 1 585 842 B1**
(45) Veröffentlichungstag und Bekanntmachung des Hinweises auf die Patenterteilung: **29.10.2008**
(21) Anmeldenummer: 04702677.8
(22) Anmeldetag: 16.01.2004
(51) Int. Cl.: C23C 2/00

(54) **TAUCHROLLE**
IMMERSION ROLLER
CYLINDRE IMMERGE

(30) Priorität: 20.01.2003 AT 722003
(43) Veröffentlichungstag der Anmeldung: 19.10.2005
(73) Patentinhaber: Siemens VAI Metals Technologies GmbH & Co, 4031 Linz (AT)
(72) Erfinder: STADLBAUER, Alois, A-4040 Linz (AT)
(74) Vertreter: Maier, Daniel Oliver
(86) Internationale Anmeldenummer: PCT/EP2004/000300
(87) Internationale Veröffentlichungsnummer: WO 2004/065651

(56) Entgegenhaltungen:
- EP-A- 0 555 836
- WO-A-00/31311
- PATENT ABSTRACTS OF JAPAN vol. 014, no. 192 (C-0711), 19. April 1990 (1990-04-19) -& JP 02 034760 A (SUMITOMO METAL IND LTD), 5. Februar 1990 (1990-02-05)
- PATENT ABSTRACTS OF JAPAN vol. 1996, no. 02, 29. Februar 1996 (1996-02-29) -& JP 07 268581 A (SUMITOMO METAL IND LTD), 17. Oktober 1995 (1995-10-17)

## Beschreibung

Die Erfindung betrifft eine Tauchrolle zur Führung eines zu beschichtenden Metallbandes in einem flüssigen Metallbad, welche in einem Tauchrollenlager drehgelagert ist und einen das Metallband in seiner Laufrichtung umlenkenden Rollenmantel mit zylindrischer Außenfläche aufweist.

Unter Tauchrollen sind hier generell Rollen zu verstehen, die teilweise in ein Metallbad eintauchen oder zur Gänze in einem Metallbad laufen, wie dies beispielsweise in einer Verzinkungsanlage und in einer Feuerverzinkungsanlage der Fall ist. Bei derartigen Anlagen laufen neben der eigentlichen Tauchrolle auch Stabilisierungsrollen und/oder Korrekturrollen im heißen Metallbad. Bei den Metallbädern handelt es sich beispielsweise um Zinkbäder, um Zinklegierungsbäder oder Aluminium-Zinklegierungsbäder. Bei den Metallbändern handelt es sich zumeist um Stahlbänder, die einer Beschichtung unterzogen werden.

Die in heißen Metallbädern eingesetzten und vorzugsweise vorgeheizten Rollen werden in vielfältiger Weise Belastungen ausgesetzt, die die Einsatzzeit insbesondere der Tauchrolle stark herabsetzen. Es kommt zu Ablagerungen von Zink-Aluminium-Verbindungen an den Rollen und zwischen den Gleitflächen der Lagerungen, wodurch die Qualität des verzinkten Metallbandes und die Laufeigenschaften der Rollen beeinträchtigt werden. Weiters unterliegen die zumeist als Gleitlager ausgebildeten Rollenlager einem hohen korrosiven und abrasiven Verschleiß in dem bis zu 500 °C heißem Metallbad. Zusätzlich kommt es durch den bis zu 180° erreichenden Umschlingungswinkel des unter Bandzug laufenden Metallbandes zu hohen Lagerdrücken, durch die die schädigende Wirkung des Metallbades noch verstärkt wird.

Für den Einsatz in heißen Metallbädern geeignete Tauchrollen sind beispielsweise aus der US-A 5,711.613 oder der DE-A 195 11 943 bekannt. Diese Tauchrollen bestehen aus einem Rollenkörper, über dessen Mantelfläche das zu beschichtende Metallband geführt wird. Der Rollenkörper endet beidseitig in Rollenzapfen, die in vorwiegend Gleitlagern drehbar abgestützt sind. Um die Funktion dieser Gleitlager im heißen Metallbad über längere Zeit aufrechtzuerhalten ist es notwendig, die Rollenzapfen und die Lagergehäuse bzw. Lagerbuchsen aus Materialien zu fertigen bzw. ihre Lauffläche mit Materialien zu beschichten, die den vielfältigen Beanspruchungen entsprechen. Die Rollenzapfen sind beispielsweise aus Stahlguss gefertigt und für die Lagerbuchsen werden nicht abrasive, vorzugsweise keramische Materialien eingesetzt, wie in der DE-A 195 11 943 beschrieben. Diese Lager laufen zwar in flüssigen Metallen, es kommt jedoch trotzdem zu Berührungen des Rollenzapfens mit der Keramik, wodurch beide stark abgenutzt werden. So weisen diese Lager einen hohen Verschleiß auf und müssen periodisch in kurzen Zeitabständen ausgewechselt werden. Dies bedeutet in jedem Fall einen Anlagenstillstand von 4 bis 8 Stunden. Zusätzlich sind die Lagermaterialien und der Zusammenbau dieser Lager sehr aufwendig.

Aus der US-A 5,711.613 sind Gleitlager für eine Tauchrolle bekannt, die teilweise aus einzelnen Metallkarbidsegmenten mit Karboneinlagen gebildet sind, in denen die mit einer keramischen Beschichtung versehenen Rollenzapfen laufen. Die Lebensdauer dieser Lager liegt wegen geringerer Verschleißwerte höher. Der strukturelle Aufbau und der Montageaufwand sind jedoch komplizierter und kostspieliger.

Durch den auf die Tauchrollen einwirkenden Bandzug kommt es in den bekannten Lagern, die einen verhältnismäßig geringen Durchmesser aufweisen, der sich am Durchmesser der Rollenzapfen orientiert, zu örtlich höheren spezifischen Flächenpressungen in den Lagerschalen, wodurch die Lebensdauer der Lager zusätzlich herabgesetzt wird.

Aufgabe der vorliegenden Erfindung ist es daher, die beschriebenen Nachteile wesentlich zu reduzieren und eine Tauchrolle bzw. eine Tauchrollenlagerung mit wesentlich erhöhter Einsatzdauer vorzuschlagen und die spezifische Belastung der Rollenlager, insbesondere durch die spezifische Flächenpressung, zu vermindern.

Diese Aufgabe wird erfindungsgemäß durch die kennzeichnenden Merkmale des Anspruch 1 gelöst.

Durch die Verlagerung der Gleitfläche des Rollenlagers vom Rollenzapfen mit geringem Außendurchmesser auf die Außenfläche des Rollenmantels mit wesentlich größerem Außendurchmesser wird die spezifische Flächenbelastung an der Kontaktfläche zwischen Rollenmantel und Gleitfläche des Tauchrollenlagers wesentlich herabgesetzt. Damit werden gleichzeitig die Gleitbedingungen zwischen Tauchrolle und Lagerschale und damit die Laufeigenschaften der Tauchrolle wesentlich verbessert.

Zweckmäßig überlagern sich der die Stützfläche für das Metallband bildende ringförmige Abschnitt des Rollenmantels und der die Gleitfläche des Tauchrollenlagers bildende ringförmige Abschnitt des Rollenmantels zumindest teilweise. Dadurch kann die Tauchrolle in ihrer Längserstreckung kürzer ausgebildet sein. Die Länge der Tauchrolle orientiert sich im Wesentlichen an der Breite des zu beschichtenden Metallbandes, was dazu führt, dass auch das Tauchbecken schmäler ausgebildet werden kann.

Nach einer weiteren Ausführungsform umfasst der die Gleitfläche des Tauchrollenlagers bildende ringförmige Abschnitt des Rollenmantels den gesamten Rollenmantel.

Um einen stabilen Rundlauf der Tauchrolle sicherzustellen ist der die Gleitfläche des Tauchrollenlagers bildende ringförmige Abschnitt des Rollenmantels von mehreren voneinander beabstandeten ringförmigen Teilabschnitten gebildet. Vorzugsweise wird der die Gleitfläche des Tauchrolllagers bildende ringförmige Abschnitt des Rollenmantels von zwei Teilabschnitten gebildet, die an den Enden oder nahe der Enden des Rollenmantels angeordnet sind, um so vergleichbare Abstützbedingungen wie bei herkömmlichen Tauchrollen mit Zapfenlagern zu erreichen.

Die die Stützfläche für das Metallband und die Gleitfläche für das Tauchrollenlager umfassende zylindrische Außenfläche des Rollenmantels weist in allen Bereichen im Wesentlichen den gleichen Durchmesser auf. Geringfügige Abstufungen im Durchmesser der Tauchrolle sind möglich, wenn einander Stützflächen und Gleitflächen in Achsrichtung der Tauchrolle nicht überlappen. In diesem Fall besteht die Möglichkeit, unterschiedliche Betriebsanforderungen durch unterschiedliche Oberflächenbearbeitung zu berücksichtigen.

Die Tauchrolle gleitet in einer Lagerschale, die in einer Tauchrollenhalterung befestigt ist. Genau genommen ist der die Gleitfläche des Tauchrollenlagers bildende ringförmige Abschnitt des Rollenmantels in einer Lagerschale eines Tragarmes abgestützt. Mit einem beweglichen Tragarm kann die Tauchrolle in eine Betriebsposition im Metallbad abgesenkt und aus dem Metallbad wieder entfernt werden.

Die Lagerschale weist eine Gleitfläche auf, die in einem Segment des Rollenmantels der Tauchrolle mit dem die Gleitfläche des Tauchrollenlagers bildenden Abschnitt des Rollenmantels das Tauchrollenlager bildet. Ein den Rollenmantel an seinem ganzen Umfang umschließendes Lager ist nicht notwendig. Es reicht, wenn ein Umfangsabschnitt bzw. ein Segmentbereich des Rollenmantels in der Lagerschale der Tauchrollenhalterung abgestützt ist. Während des Betriebes der Bandbehandlungsanlage wird die Tauchrolle durch das umlaufende Metallband in ihrer Position in der Lagerschale gehalten. Der Anpressdruck wird hierbei durch den auf das Metallband einwirkenden Bandzug bestimmt.

Nach einer vorteilhaften Ausführungsform ist die Lagerschale trogförmig ausgebildet und an ihren Stirnseiten schließen Stützwände an, die den rotierenden Stirnflächenwänden der Tauchrolle gegenüber liegen. Die Stützwände bieten Anlaufflächen für die Tauchrolle und verhindern deren seitliches Verlaufen. Damit ist die Tauchrolle innerhalb eines engen Bereiches lagepositioniert.

Zur Aufrechterhaltung eines optimalen Lagerspaltes zwischen den beiden korrespondierenden Gleitflächen ist vorgesehen, dass die Lagerschale eine Mehrzahl von Durchtrittsöffnungen für Flüssigmetall aufweist, die von einer Flüssigmetallkammer ausgehen und gegen den die Gleitfläche des Tauchrollenlagers bildenden ringförmigen Abschnitt des Rollenmantels gerichtet sind. Durch die Durchtrittsöffnung tritt laufend Flüssigmetall aus und bildet einen Schmierfilm, wie er für eine hydrodynamische Gleitlagerung notwendig ist. Die Flüssigmetallkammer kann hierbei von einem Raum innerhalb des Tragarmes oder direkt vom Tauchbecken gebildet sein. Zur Sicherung einer kontinuierlichen Flüssigmetallzufuhr ist der Flüssigmetallkammer eine Flüssigmetallpumpe zugeordnet, mit der über eine geregelt geförderte Heißmetallmenge der Lagerspalt und damit die Gleitbedingungen im Lager beeinflussbar sind. Mit der Flüssigmetallzufuhr ist auch eine ausreichende Schmierung zwischen den Stützwänden der trogförmigen Lagerschale und den daran anlaufenden Stirnseitenwänden der Tauchrolle stets gegeben. Alternativ besteht die Möglichkeit, Flüssigmetall unter Verzicht auf eine Flüssigmetallpumpe selbsttätig in ausreichender Menge in den Lagerspalt zu fördern, da im Lagerspalt ein Unterdruck herrscht.

Damit die Position der Tauchrolle auch dann festgelegt ist, wenn ihre Lage in der Lagerschale nicht durch das umlaufende Metallband festliegt, mündet der Rollenmantel beidseitig in Führungszapfen, die in Führungen einer Tauchrollenhalterung verlagerbar abgestützt sind.

Weitere Vorteile und Merkmale der vorliegenden Erfindung ergeben sich aus der nachfolgenden Beschreibung nicht einschränkender Ausführungsbeispiele, wobei auf die beiliegenden Figuren Bezug genommen wird, die folgendes zeigen:
- Fig. 1: einen Querschnitt durch eine Verzinkungsanlage im Bereich eines Zinkbad-Tauchbeckens mit der erfindungsgemäßen Tauchrolle,
- Fig. 2: eine Tauchrolle mit der erfindungsgemäßen Lagerung an einem Tragarm,
- Fig. 3: eine trogförmige Lagerschale zur Abstützung der Tauchrolle,
- Fig. 4: die erfindungsgemäße Anordnung von Stützfläche und Gleitflächen auf der Außenfläche des Rollenmantels nach einer ersten Ausführungsform,
- Fig. 5: die erfindungsgemäße Anordnung von Stützfläche und Gleitflächen auf der Außenfläche des Rollenmantels nach einer zweiten Ausführungsform,
- Fig. 6: die erfindungsgemäße Anordnung von Stützfläche und Gleitflächen auf der Außenfläche des Rollenmantels nach einer dritten Ausführungsform.

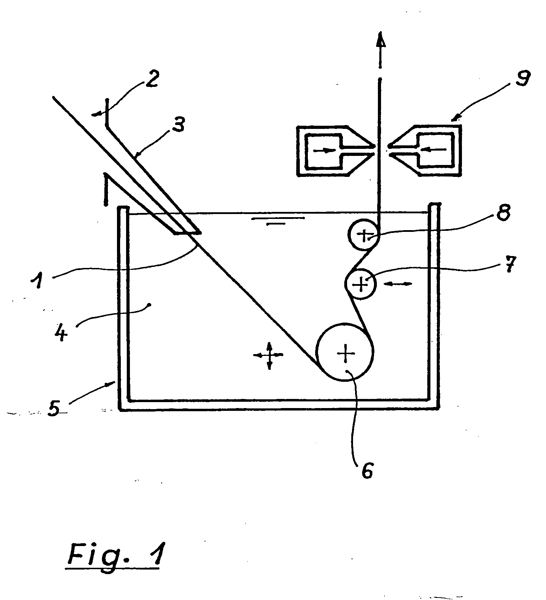

In Fig. 1 ist in einer schematischen Darstellung der Bandlauf in einem heißen Metallbad einer Bandbehandlungsanlage veranschaulicht, im Speziellen der Bandlauf eines Stahlbandes im Zinkbad einer Verzinkungsanlage. Das zu beschichtende Metallband 1 wird von einem Glühofen 2 kommend durch einen Tauchrüssel 3 in ein mit Flüssigmetall 4 gefülltes Tauchbecken 5 gefördert, dort um eine Tauchrolle 6 geführt und tritt vertikal mit nach oben gerichteter Bandlaufrichtung aus dem Metallbad wieder aus. Zur Bandlaufstabilisierung sind im Metallbad zusätzlich eine in Pfeilrichtung horizontal verlagerbare Korrekturrolle 7 und eine Stabilisierungsrolle 8 an das Band angestellt. Während des Durchlaufs durch das Metallbad lagert sich das Beschichtungsmaterial an der Metallbandoberfläche ab. Überschüssiges Beschichtungsmaterial wird nach dem Verlassen des Metallbades unter der Wirkung eines gebündelten Luftstrahles oder Stickstoffstrahles mit einem Luftmesser 9 abgestreift. Zum Abstreifen des überschüssigen Flüssigmetalles von der Metallbandoberfläche können auch andere Abstreifeinrichtungen eingesetzt werden.

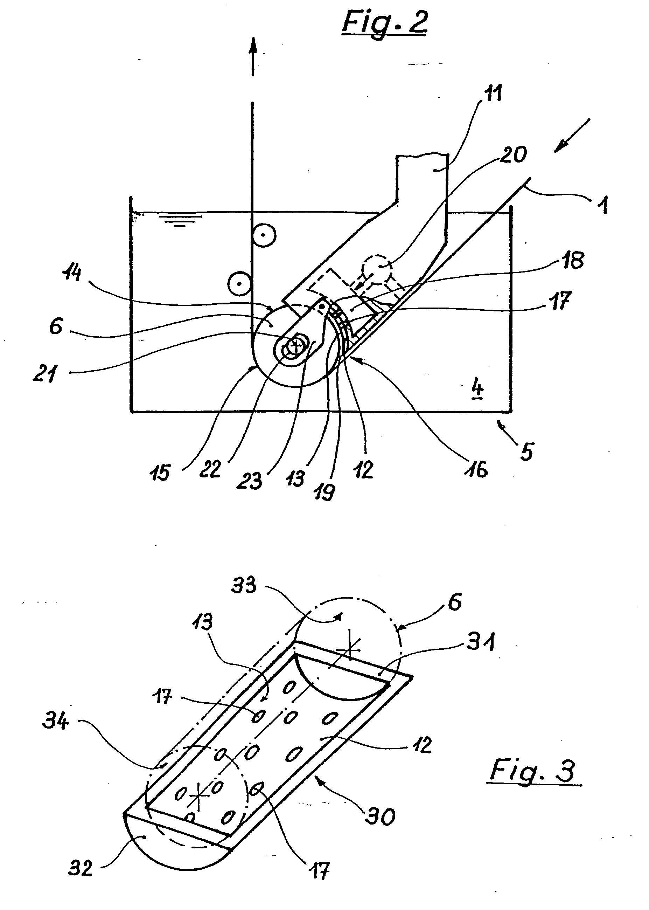

Die Tauchrolle 6 ist, wie Fig. 2 schematisch zeigt, an einem beweglichen Tragarm 11 abgestützt, mit dem die Tauchrolle in ihre Betriebsposition im Metallbad abgesenkt und aus dem Metallbad wieder entfernt werden kann. Stirnseitig ist der Tragarm 11 mit einer Lagerschale 12 belegt, deren Gleitfläche 13 mit der gegenüberliegenden zylindrischen Außenfläche 14 des Rollenmantels 15 das Tauchrollenlager 16 bildet. Die Lagerschale 12 ist mit einer Mehrzahl von radial ausgerichteten Durchtrittsöffnungen 17 bestückt, die Verbindungskanäle zwischen einer Flüssigmetallkammer 18 und einem Lagerspalt 19 zwischen der Lagerschale 12 und der zylindrischen Außenfläche 14 des Rollenmantels herstellt. Von einer Flüssigmetallpumpe 20 wird stetig Flüssigmetall 4 aus dem Tauchbecken 5 in die Flüssigmetallkammer 18 und weiter in den Lagerspalt 19 gefördert und so eine optimale Schmiermittelschicht aus Flüssigmetall in Abhängigkeit vom Bandzug, der eine straffe Bandführung sicherstellt, bzw. der im Tauchrollenlager 16 auftretenden Flächenpressung eingestellt und aufrechterhält.

In Fig. 3 ist eine trogförmig ausgebildete Lagerschale 12 in einer gegenüber Fig. 2 gedrehten Ansicht in einem Schrägriss dargestellt. Die Lagerschale 12 umgreift die mit strichpunktierten Linien angedeutete Tauchrolle 6 entlang ihrer Längserstreckung über einen Umfangsabschnitt. Die Lagerschale 12 umfasst einen kreisbogenförmigen Rinnenkörper 30, der die Gleitfläche 13 der Lagerschale 12 ausbildet und stirnseitige Stützwände 31, 32, die die Lagerschale 12 in ihrer Längserstreckung begrenzen. In diesem vom Rinnenkörper 30 und den Stützwänden 31, 32 geformten Trograum ist die Tauchrolle 6 in ihrem Betriebszustand eingebettet und durch die Stützwände 31, 32, die den Stirnseitenwänden 33, 34 der Tauchrolle 6 gegenüberliegen, gegen axiales Verschieben gesichert.

Stirnseitig schließen, wie in Fig. 2 gezeigt, an die Tauchrolle 6 kurze Führungszapfen 21 an, die in von Langlöchern gebildete Führungen 22 einer Tauchrollenhalterung 23 eingreifen. Die Tauchrollenhalterung 23 ist von Laschen gebildet, die am Tragarm 11 lösbar befestigt sind. So wird eine die Tauchrolle 6 tragende Verbindung mit dem Tragarm 11 auch dann sichergestellt, wenn die Tauchrolle nicht von einem Metallband 1 in die Lagerschale 12 gedrückt wird. Da diesen Führungszapfen keine Lagerfunktion zukommt, besteht auch keine Notwendigkeit für eine besondere Oberflächenausbildung an diesen Führungszapfen hinsichtlich Fertigungstoleranzen und Werkstoffauswahl.

Nach einer bildlich nicht dargestellten Ausführungsform ist es auch möglich, die Tauchrollenhalterung 23 nach Fig. 2 so auszubilden, dass sie auch die Funktion der axialen Lagesicherung der Tauchrolle während der Betriebsphase übernimmt, indem die Laschen an den der Tauchrollenstirnwand zugewandten Seiten Gleitflächen aufweisen oder mit Gleitelementen besetzt sind.

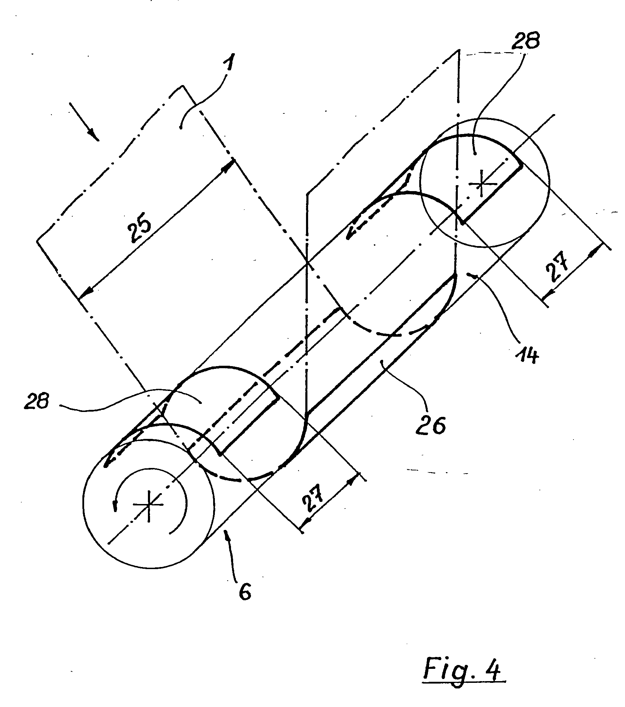

Mehrere mögliche Ausführungsformen der Anordnung der Stützfläche für das auf der zylindrischen Außenfläche des Rollenmantels einer Tauchrolle umlaufende Metallband und einer oder mehrerer Gleitflächen des Tauchrollenlagers Außenfläche des Rollenmantels sind in den Figuren 4 bis 6 schematisch dargestellt.

Fig. 4 zeigt eine Tauchrolle 6 mit einer zylindrischen Außenfläche 14 des Rollenmantels, der sich durchgehend mit gleichbleibendem Durchmesser über die Länge der Tauchrolle erstreckt. In einem Mittenbereich wird das zu beschichtenden Metallband 1 in der durch den Pfeil angedeuteten Bandförderrichtung unter Bandzug um die Tauchrolle geführt. Durch die Breite des Metallbandes 1 wird ein ringförmiger Abschnitt 25 auf der zylindrischen Außenfläche 14 des Rollenmantels festgelegt, der die Stützfläche 26 für das Metallband 1 bildet. Beidseitig neben diesem zentralen ringförmigen Abschnitt 25 für den Bandumlauf sind weitere ringförmige Abschnitte 27 festgelegt. In einem bestimmten Segment dieser rotierenden ringförmige Abschnitte 27 werden Gleitflächen 28 an der Außenfläche 14 des Rollenmantels ausgebildet, die den hier nicht dargestellten Lagerschalen gegenüberliegen. Diese Gleitflächen 28 sind Teil des Tauchrollenlagers.

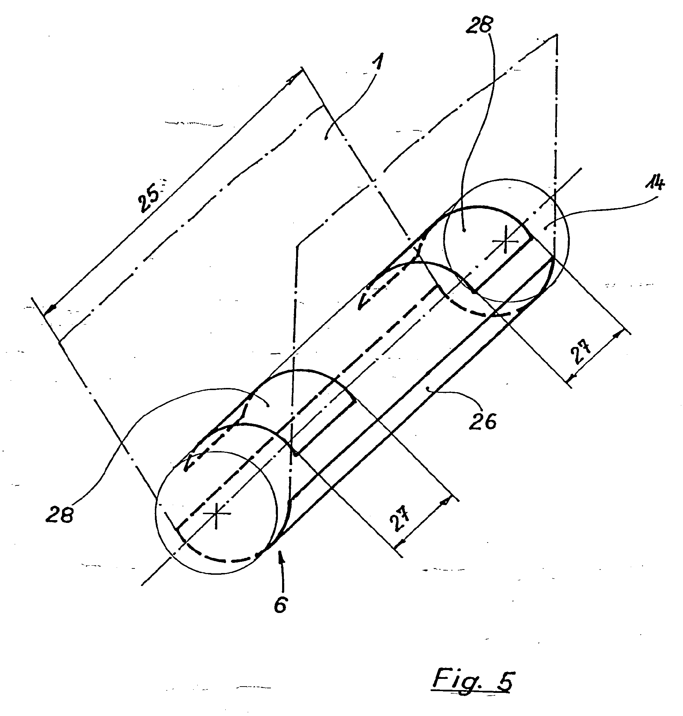

Fig. 5 zeigt eine zweite Ausführungsform für die Anordnung der Stützfläche für das auf der zylindrischen Außenfläche des Rollenmantels einer Tauchrolle umlaufende Metallband und zweier Gleitflächen des an der Außenfläche des Rollenmantels angeordneten Tauchrollenlagers, wobei die beiden ringförmigen Abschnitte 27 der Außenfläche des Rollenmantels, die die Gleitflächen 28 des Tauchrollenlagers darstellen, innerhalb des ringförmigen Abschnitts 25 des Rollenmantels liegen, der die Stützfläche 26 für das Metallband 1 bestimmt. Diese Ausführungsform ermöglicht eine verkürzte Tauchrollenlänge, die ausschließlich von der Bandbreite des zu beschichtenden Metallbandes bestimmt wird. Damit wird auch ein schmäleres Tauchbecken realisierbar.

Nach einer weiteren nicht dargestellten Ausführungsform ist es auch möglich, dass sich die beiden ringförmigen Abschnitte, denen die Gleitflächen der Tauchrollenlager zugeordnet sind, mit dem zentralen ringförmigen Abschnitt, der die Stützfläche für das Metallband bildet, nur teilweise überdeckt.

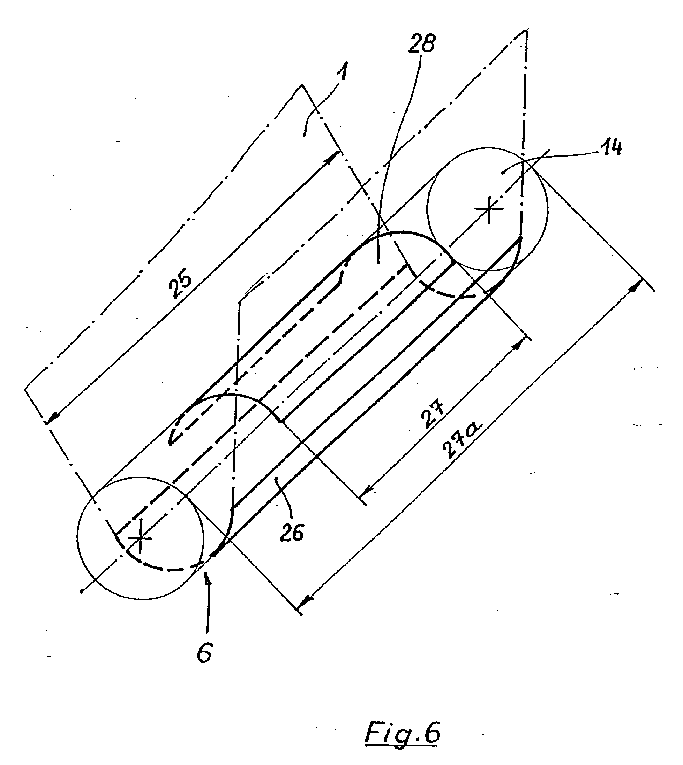

In Fig. 6 ist eine weitere Ausführungsform dargestellt, bei der nur ein ringförmiger Abschnitt 27 vorgesehen ist, der eine Gleitfläche 28 für ein Tauchrollenlager in zentrischer Anordnung seitlich begrenzt und mittig innerhalb eines ringförmigen Abschnittes 25 ist, der die Stützfläche 26 für das umlaufende Metallband 1 seitlich begrenzt.

Der ringförmige Abschnitt 27, der die Gleitfläche 28 für die Tauchrollenlagerung und damit die Kontaktfläche mit der Lagerschale 12 bezeichnet, kann sich jedoch auch über den ringförmigen Abschnitt 25 hinaus und bis an das Ende des Rollenmantels 15 erstrecken, wie durch die Bemaßung 27a angedeutet ist. Dies ist speziell dann der Fall, wenn die Lagerschale 12, wie in Fig. 3 dargestellt, trogförmig ausgebildet ist. Bei dieser trogförmigen Ausbildung der Lagerschale ist es dann wiederum zweckmäßig, in einem Zentrumsbereich besondere Maßnahmen zu setzen, die den gleichmäßigen Verzinkungsvorgang am umlaufenden Band fördern, wie dies beispielsweise durch mittige oder zonenweise Anordnung einer Rillenstruktur auf dem Rollenmantel üblicherweise geschieht.

Die Beschichtung des Rollenmantels im Bereich der Lagerung erfolgt bei der erfindungsgemäßen Ausformung dieser Lagerung in gleicher Weise, wie dies derzeit bei den Laufflächen am Rollenzapfen üblich ist.

Die Erfindung ist nicht auf eine Tauchrolle für das Umlenken eines Metallbandes in der zuvor beschriebenen Anwendung in einem Metallbad beschränkt, sondern erstreckt sich auf alle Arten von Rollen die in einem flüssigem Metallbad laufen und für eine kontinuierliche Förderung oder Führung von langgestreckten Gut in einem Metallbad eingesetzt werden.

Eine geringe Durchmesserabstufung am Rollenmantel zwischen dem Abschnitt, der die Stützfläche für das Metallband umfasst und dem Abschnitt, der die Gleitfläche des Tauchrollenlagers bildet, fällt ebenfalls in den Schutzumfang des Patentes, solange der Vorteil der wesentlich reduzierten Flächenpressung gegenüber der bekannten Zapfenlagerung nicht verloren geht.

## Patentansprüche

1. Tauchrolle zur Führung eines zu beschichtenden Metallbandes (1) in einem flüssigen Metallbad, welche in einem Tauchrollenlager (16) drehgelagert ist und einen das Metallband in seiner Laufrichtung umlenkenden Rollenmantel (15) mit zylindrischer Außenfläche (14) aufweist, **dadurch gekennzeichnet, dass** der von einer zylindrischen Außenfläche (14) begrenzte Rollenmantel (15) zumindest abschnittsweise die Stützfläche (26) für das Metallband (1) und zumindest abschnittsweise eine Gleitfläche (28) des Tauchrollenlagers (16) bildet und die zylindrische Außenfläche (14) des Rollenmantels (15) in allen Abschnitten im Wesentlichen den gleichen Durchmesser aufweist.

2. Tauchrolle nach Anspruch 1, **dadurch gekennzeichnet, dass** sich der die Stützfläche (26) für das Metallband bildende ringförmige Abschnitt (25) des Rollenmantels (15) und der die Gleitfläche (28) des Tauchrollenlagers (16) bildende ringförmige Abschnitt (27) des Rollenmantels (15) zumindest teilweise überlagern.

3. Tauchrolle nach Anspruch 1 oder 2, **dadurch gekennzeichnet, dass** der die Gleitfläche (28) des Tauchrollenlagers (16) bildende ringförmige Abschnitt (27) des Rollenmantels (15) den gesamten Rollenmantel (15) umfasst.

4. Tauchrolle nach einem der vorhergehenden Ansprüche, **dadurch gekennzeichnet, dass** der die Gleitfläche (28) des Tauchrollenlagers (16) bildende ringförmige Abschnitt (27) des Rollenmantels (15) von mehreren voneinander beabstandeten ringförmigen Teilabschnitten (27) gebildet ist.

5. Tauchrolle nach einem der vorhergehenden Ansprüche, **dadurch gekennzeichnet, dass** der die Gleitfläche (28) des Tauchrollenlagers (16) bildende ringförmige Abschnitt (27) des Rollenmantels (15) in einer Lagerschale (12) eines vorzugsweise beweglich ausgebildeten Tragarmes (11) abgestützt ist.

6. Tauchrolle nach Anspruch 5, **dadurch gekennzeichnet, dass** die Lagerschale (12) eine Gleitfläche (13) aufweist, die in einem Segment des Rollenmantels (15) der Tauchrolle (6) mit dem die Gleitfläche (28) bildenden Abschnitt (27) des Rollenmantels das Tauchrollenlager (16) bildet.

7. Tauchrolle nach einem der Ansprüche 5 oder 6, **dadurch gekennzeichnet, dass** die Lagerschale (12) trogförmig ausgebildet ist und an ihren Stirnseiten Stützwände (31, 32) anschließen, die den rotierenden Stirnseitenwänden (33, 34) der Tauchrolle gegenüber liegen.

8. Tauchrolle nach einem der Ansprüche 5 bis 7, **dadurch gekennzeichnet, dass** die Lagerschale (12) eine Mehrzahl von Durchtrittsöffnungen (17) für Flüssigmetall aufweist, die von einer Flüssigmetallkammer (18) ausgehen und gegen den die Gleitfläche (27) des Tauchrollenlagers (16) bildenden ringförmigen Abschnitt (27) des Rollenmantels (15) gerichtet sind.

9. Tauchrolle nach Anspruch 8, **dadurch gekennzeichnet, dass** der Flüssigmetallkammer (18) eine Flüssigmetallpumpe (20) zugeordnet ist.

10. Tauchrolle nach einem der vorhergehenden Ansprüche, **dadurch gekennzeichnet, dass** der Rollenmantel (15) beidseitig in Führungszapfen (21) mündet, die in Führungen (22) einer Tauchrollenhalterung (23) verlagerbar abgestützt sind.

## Claims

1. Dipping roller for the guidance, in a liquid metal bath, of a metal strip (1) to be coated, which dipping roller is rotary-mounted in a dipping-roller bearing (16) and has a roller casing (15) deflecting the metal strip in its running direction and having a cylindrical outer face (14), **characterized in that** the roller casing (15) delimited by a cylindrical outer face (14) forms, at least in portions, the supporting surface (26) for the metal strip (1) and, at least in portions, a sliding surface (28) of the dipping-roller bearing (16), and the cylindrical outer face (14) of the roller casing (15) has essentially the same diameter in all portions.

2. Dipping roller according to Claim 1, **characterized in that** the annular portion (25), forming the supporting surface (26) for the metal strip, of the roller casing (15) and the annular portion (27), forming the sliding surface (28) of the dipping-roller bearing (16), of the roller casing (15) are at least partially superposed one on the other.

3. Dipping roller according to Claim 1 or 2, **characterized in that** the annular portion (27), forming the sliding surface (28) of the dipping-roller bearing (16), of the roller casing (15) comprises the entire roller casing (15).

4. Dipping roller according to one of the preceding claims, **characterized in that** the annular portion (27), forming the sliding surface (28) of the dipping-roller bearing (16), of the roller casing (15) is formed by a plurality of annular subsections (27) spaced apart from one another.

5. Dipping roller according to one of the preceding claims, **characterized in that** the annular portion (27), forming the sliding surface (28) of the dipping-roller bearing (16), of the roller casing (15) is supported in a bearing shell (12) of a preferably movably designed carrying arm (11).

6. Dipping roller according to Claim 5, **characterized in that** the bearing shell (12) has a sliding surface (13) which, in a segment of the roller casing (15) of the dipping roller (6), forms, with that portion (27) of the roller casing which forms the sliding surface (28), the dipping-roller bearing (16).

7. Dipping roller according to either one of Claims 5 and 6, **characterized in that** the bearing shell (12) is of trough-shaped design, and its end faces have adjoining them supporting walls (31, 32) which lie opposite the rotating end-face walls (33, 34) of the dipping roller.

8. Dipping roller according to one of Claims 5 to 7, **characterized in that** the bearing shell (12) has a plurality of passage orifices (17) for liquid metal which emanate from a liquid-metal chamber (18) and which are directed towards the annular portion (27), forming the sliding surface (28) of the dipping-roller bearing (16), of the roller casing (15).

9. Dipping roller according to Claim 8, **characterized in that** the liquid-metal chamber (18) is assigned a liquid-metal pump (20).

10. Dipping roller according to one of the preceding claims, **characterized in that** the roller casing (15) issues on both sides in guide journals (21) which are supported displaceably in guides (22) of a dipping-roller holding device (23).

## Revendications

1. Cylindre immergé servant au guidage d'une bande métallique (1) à recouvrir dans un bain de métal liquide, lequel est monté, de façon à pouvoir tourner, sur un palier de cylindre immergé (16) et comporte une enveloppe de cylindre (15) pourvue d'une surface extérieure (14) cylindrique, qui dévie la bande métallique dans son déplacement, **caractérisé en ce que** l'enveloppe de cylindre (15) délimitée par une surface extérieure (14) cylindrique forme, au moins dans une section, la surface d'appui (26) destinée à la bande métallique (1) et, au moins dans une section, une surface de glissement (28) du palier de cylindre immergé (16), et la surface extérieure (14) cylindrique de l'enveloppe de cylindre (15) présente, dans toutes les sections, essentiellement le même diamètre.

2. Cylindre immergé selon la revendication 1, **caractérisé en ce que** la section annulaire (25) de l'enveloppe de cylindre (15) formant la surface d'appui (26) destinée à la bande métallique et la section annulaire (27) de l'enveloppe de cylindre (15) formant la surface de glissement (28) du palier de cylindre immergé (16) se chevauchent au moins en partie.

3. Cylindre immergé selon la revendication 1 ou 2, **caractérisé en ce que** la section annulaire (27) de l'enveloppe de cylindre (15) formant la surface de glissement (28) du palier de cylindre immergé (16) comprend toute l'enveloppe de cylindre (15).

4. Cylindre immergé selon l'une quelconque des revendications précédentes, **caractérisé en ce que** la section annulaire (27) de l'enveloppe de cylindre (15) formant la surface de glissement (28) du palier de cylindre immergé (16) est formée par plusieurs sections partielles (27) annulaires espacées les unes des autres.

5. Cylindre immergé selon l'une quelconque des revendications précédentes, **caractérisé en ce que** la section annulaire (27) de l'enveloppe de cylindre (15) formant la surface de glissement (28) du palier de cylindre immergé (16) est supportée dans une coque de palier (12) d'un bras de support (11) de préférence mobile.

6. Cylindre immergé selon la revendication 5, **caractérisé en ce que** la coque de palier (12) présente une surface de glissement (13) qui dans un segment de l'enveloppe de cylindre (15) du cylindre immergé (6) forme, avec la section (27) de l'enveloppe de cylindre formant la surface de glissement (28), le palier de cylindre immergé (16).

7. Cylindre immergé selon l'une quelconque des revendications 5 ou 6, **caractérisé en ce que** la coque de palier (12) est réalisée en forme d'auge et des parois de support (31, 32) se raccordent à ses côtés frontaux, lesquelles sont en regard des parois tournantes des côtés frontaux (33, 34) du cylindre immergé.

8. Cylindre immergé selon l'une quelconque des revendications 5 à 7, **caractérisé en ce que** la coque de palier (12) présente une pluralité d'ouvertures de passage (17) pour du métal en fusion, qui partent d'une chambre de métal en fusion (18) et qui sont orientées vers la section annulaire (27) de l'enveloppe de cylindre (15) formant la surface de glissement (28) du palier de cylindre immergé (16).

9. Cylindre immergé selon la revendication 8, **caractérisé en ce que** la chambre de métal en fusion (18) est associée à une pompe de métal en fusion (20).

10. Cylindre immergé selon l'une quelconque des revendications précédentes, **caractérisé en ce que** l'enveloppe de cylindre (15) débouche des deux côtés dans des tourillons de guidage (21) qui sont supportés de manière déplaçable dans des guides (22) d'une fixation de cylindre immergé (23).
